# FASCICULE DE BREVET EUROPEEN

(11) **EP 1 846 976 B1**
(45) Date de publication et mention de la délivrance du brevet: **30.06.2010**
(21) Numéro de dépôt: 06709404.5
(22) Date de dépôt: 12.01.2006
(51) Int. Cl.: H01M 8/10, H01M 8/24

(54) **CONVERTISSEUR ELECTROCHIMIQUE COMPACT**
KOMPAKTER ELEKTROCHEMISCHER WANDLER
COMPACT ELECTROCHEMICAL CONVERTER

(30) Priorité: 17.01.2005 FR 0550131
(43) Date de publication de la demande: 24.10.2007
(73) Titulaire: Forte, Pierre, 64100 Bayonne (FR)
(72) Inventeur: Forte, Pierre, 64100 Bayonne (FR)
(74) Mandataire: Schmit, Christian Norbert Marie
(86) Numéro de dépôt international: PCT/FR2006/050016
(87) Numéro de publication internationale: WO 2006/075119

(56) Documents cités:
- EP-A- 0 482 783
- EP-A- 1 333 517
- DE-A1- 19 624 887
- US-A- 5 336 570
- US-A- 5 364 711
- US-A- 5 925 477
- US-A1- 2004 219 412
- A. HEINZEL, R. NOLTE, K. LEDJEFF-HEY, M. ZEDDA: "Membrane Fuel Cells - concepts and system design" ELECTROCHEMICA ACTA, vol. 43, no. 24, 1998, pages 3817-3820, XP002340535 Great Britain
- LEE S J ET AL: "Design and fabrication of a micro fuel cell array with ''flip-flop'' interconnection" JOURNAL OF POWER SOURCES, ELSEVIER SEQUOIA S.A. LAUSANNE, CH, vol. 112, no. 2, 14 novembre 2002 (2002-11-14), pages 410-418, XP004391001 ISSN: 0378-7753

## Description

La présente invention concerne un convertisseur électrochimique de type pile à combustible compact.

Les convertisseurs électrochimiques de type pile à combustible sont des dispositifs combinant de l'hydrogène et de l'oxygène sans combustion pour produire un courant électrique selon un procédé fonctionnant à l'inverse d'une électrolyse et formant de l'eau.

Un type de convertisseur connu est constitué des piles à membranes protoniques.

Ces piles opèrent à basse température, jusqu'à 100°C, comportent des ensembles membranes électrodes, des plaques rigides comprimant les ensembles membranes électrodes, les plaques constituant des plaques dipolaires.

La conception d'une pile à combustible doit permettre l'alimentation de la pile en carburant et comburant (typiquement de l'hydrogène et de l'oxygène), permettre le transport et l'évacuation de l'eau et des gaz inertes (azote et dioxyde de carbone de l'air) produits comme résidus par la réaction, fournir des électrodes pour supporter le catalyseur de la réaction, collecter les charges électriques et dissiper l'énergie thermique.

La conductivité électrique et thermique des composants, la pression des réactants, la température, la superficie des électrodes, la disponibilité du catalyseur, la gestion de l'eau et la géométrie sont les principaux facteurs affectant les performances et le rendement d'une pile à combustible ou convertisseur électrochimique.

Les piles à combustible actuelles de type piles à membrane protonique (PEM) ou à acide phosphorique s'appuient sur une conception utilisant des électrodes plates.

Un sous ensemble membrane - électrodes est comprimé entre deux plaques rigides, cet ensemble constituant alors un élément de la pile.

Afin d'obtenir une tension électrique donnée, plusieurs éléments sont mis en série en les empilant. Les plaques sont alors appelées "plaques dipolaires" dans le sens où elles font le lien électrique entre deux pôles (une anode et une cathode) de deux éléments distincts.

Afin de favoriser une répartition homogène des réactants sur la surface des dites électrodes, des couches de diffusion gazeuse sont insérées entre les plaques dipolaires et les électrodes.

Le rôle des plaques dipolaires est multiple. Elles doivent être électriquement conductrices afin de permettre le déplacement des électrons de l'anode d'un élément à la cathode de l'élément adjacent, être thermiquement conductrices afin de dissiper l'énergie thermique produite par la réaction chimique, être imperméables aux réactants (notamment l'hydrogène), être munies de canaux permettant la distribution des gaz réactants aux électrodes et de canaux permettant la circulation d'un liquide réfrigérant si nécessaire.

En outre, les plaques dipolaires doivent être raisonnablement rigides afin de préserver l'intégrité de l'ensemble de la pile, servir d'ossature à la pile, fournir un support suffisamment résistant pour y appliquer des joints de compression et être suffisamment résistantes à la corrosion.

Du fait de ces contraintes, la plupart des plaques bipolaires sont réalisées en graphite très dense ou en acier inoxydable. De part la complexité des formes des plaques dipolaires, et, dans certains cas, le choix des matériaux, elles représentent une fraction importante du coût d'une pile à combustible (jusqu'à 50%). De plus, le choix des matériaux, outre leur poids important, fait qu'elles représentent presque l'essentiel du volume de la pile.

Par ailleurs, les géométries de type empilement actuellement utilisées impliquent l'utilisation de nombreux joints entre les plaques et les ensembles membrane - électrode, rendant ainsi leur assemblage complexe et coûteux.

Un exemple de convertisseur électrochimique constituant une pile à combustible à plaques est décrit dans le document US 5 382 478.

Ce document décrit un dispositif comprenant un empilement de cellules électrochimiques et une section d'humidification disposée en amont de la section active de la partie électrochimique du dispositif.

Comme expliqué plus haut, un dispositif tel que décrit dans ce document est volumineux et comporte notamment des plaques dipolaires lourdes et de forme complexe.

Le document US 6063 517 A décrit un arrangement adapté à être enroulé en spirale pour la réalisation d'une pile à combustible pourvue d'une anode, enroulée sur elle même en spirale autour d'un premier tube d'amenée d'hydrogène, d'un second tube, d'amenée d'hydrogène, en extrémité distale de la spirale et d'une membrane protonique entourant l'anode et les tubes.

Un tel arrangement ne permet pas de réaliser un convertisseur électrochimique ou pile à combustible compact et fournissant une tension élevée sans l'utilisation de plaques dipolaires.

Le document EP 1333517 A2 décrit un dispositif pour lequel des pistes conductrices selon la technologie des semi-conducteurs traversent une membrane protonique et sont reliées à des grilles de dérivation sous les électrodes.

La présente invention a pour objet la réalisation d'un convertisseur électrochimique à membrane protonique perfectionné comportant une pluralité de cellules de conversion électrochimiques unitaires reliées en série et pour lequel les plaques dipolaires sont remplacées par une géométrie particulière du dispositif, conservant une souplesse importante au convertisseur.

Pour ce faire, la présente invention concerne principalement un convertisseur électrochimique à membrane protonique comportant une pluralité de cellules électrochimiques reliées en série, caractérisé en ce qu'il comporte un premier substrat, sous forme d'une bande continue et des seconds substrats sous forme de segments de bande, le premier substrat comportant une première face, sur laquelle est réalisée une succession de premiers dépôts formant une série d'anodes espacées, et une seconde face, sur laquelle est réalisée une succession de seconds dépôts formant une série de cathodes espacées disposées en regard desdites anodes, lesdites anodes et cathodes formant une succession de cellules de conversion unitaires, le premier substrat étant pourvu d'une succession de traversées de passage des seconds substrats, les seconds substrats étant dimensionnés pour réaliser une piste de connexion entre une cathode d'une cellule unitaire et une anode d'une cellule unitaire adjacente.

La suppression des plaques dipolaires, selon l'invention, permet un gain important de masse et une simplification notable des piles à combustible ce qui permet en particulier une augmentation notable de la densité énergétique de la pile et donc de son rapport puissance/masse.

La réalisation de traversées et l'utilisation de seconds substrats traversant le premier substrat pour réaliser des pistes de connexion entre une anode et une cathode de cellules adjacentes permet de réaliser un convertisseur électrochimique fournissant une tension importante sous un faible volume.

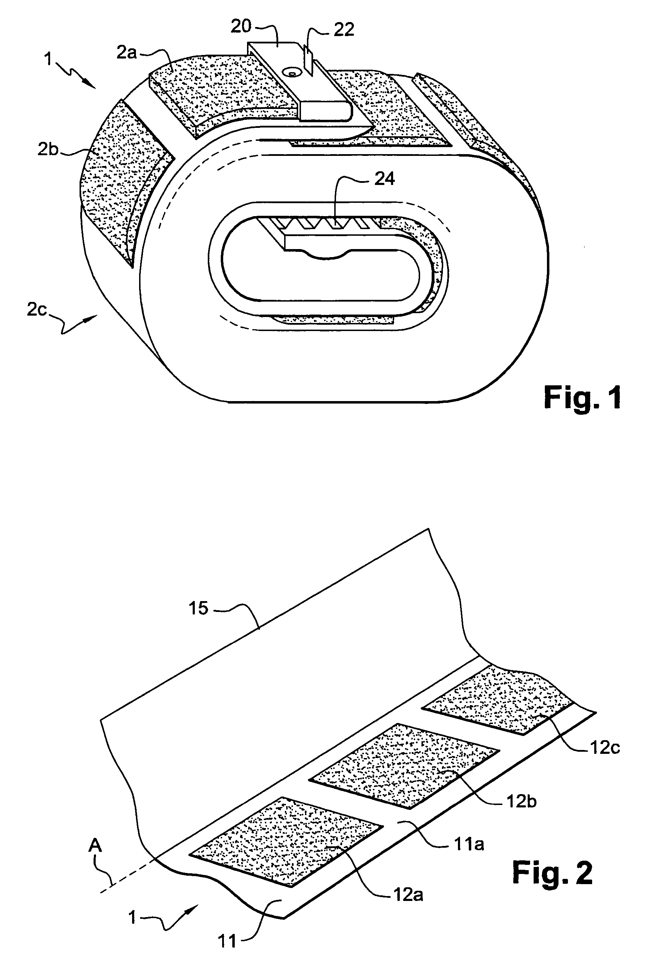

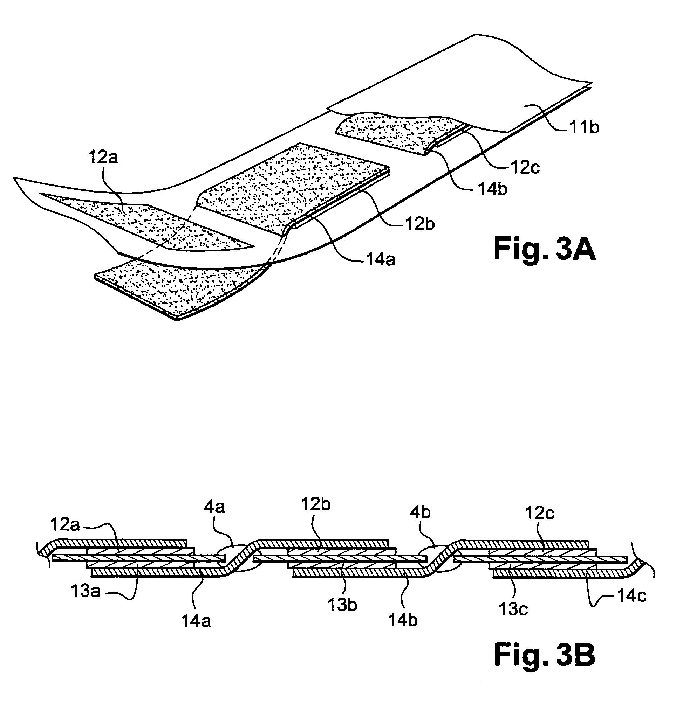

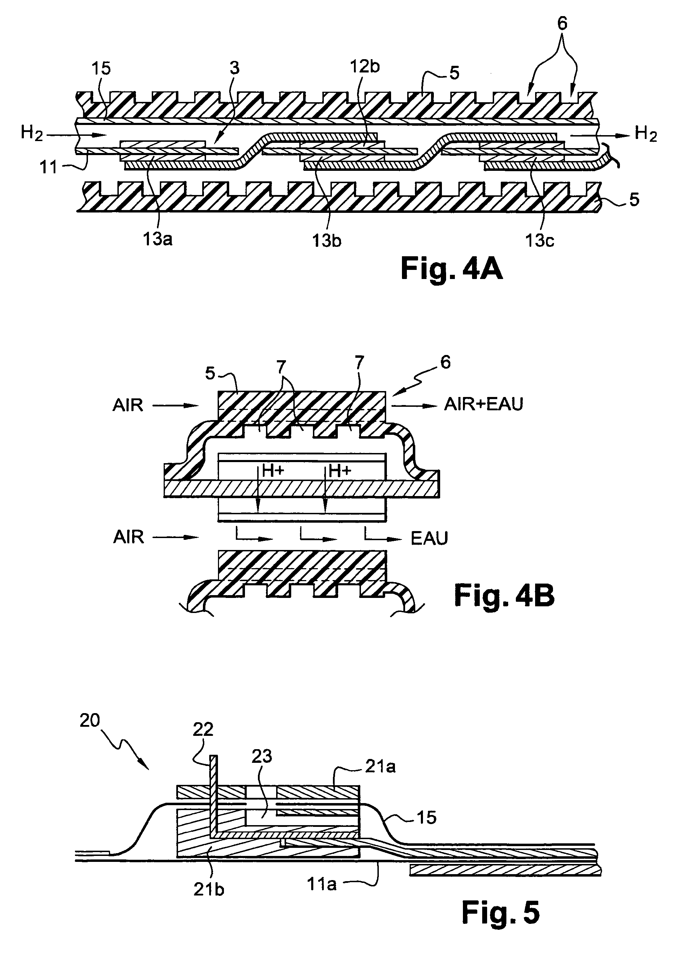

D'autres caractéristiques et avantages de l'invention seront mieux compris à la lecture de la description d'un exemple non limitatif de réalisation de l'invention en référence aux figures qui représentent:
en figure 1: une vue schématique externe d'une pile à combustible selon l'invention;
en figure 2: .une vue en perspective d'un segment d'un premier substrat pour la réalisation de la pile de la figure 1;
en figures 3A et 3B:des vues respectivement en éclaté et de côté de cellules de conversion réalisées sur le segment de la figure 2;
en figures 4A et 4B:des vues en coupe respectivement de côté et de face d'un segment de la pile de la figure 1;
en figure 5: un exemple de réalisation d'une terminaison de la pile de la figure 1.

Le convertisseur électrochimique ou pile à combustible selon l'invention représenté en figure 1 a pour premier avantage d'être dépourvu de plaques dipolaires.

Contrairement à une géométrie classique où les plaques dipolaires constituent l'ossature de la pile et lui donnent sa forme, sa résistance structurale et supportent les éléments de membrane et les électrodes, la pile selon l'invention est souple et n'est mise en forme qu'une fois l'assemblage terminé.

Pour réaliser le convertisseur électrochimique 1 de la figure 1, l'invention comporte comme élément de départ une membrane protonique qui supporte l'ensemble des électrodes de la pile et représente la pièce essentielle du corps de la pile.

La membrane protonique représentée en figure 2 est réalisée à partir d'un premier substrat 11 constituant ladite membrane.

Ce substrat représenté en vue de côté à la figure 3B et en figure 4A comporte une première face 11a, sur laquelle est réalisée une succession de premiers dépôts formant une série d'anodes espacées 12a, 12b, 12c, ... , et une seconde face, sur laquelle est réalisée une succession de seconds dépôts formant une série de cathodes espacées 13a, 13b, 13c, ..., disposées en regard desdites anodes, lesdites anodes et cathodes formant une pluralité de cellules de conversion unitaires 2a, 2b, 2c, ... reliées en série.

L'arrangement des cellules de conversion unitaires est prévu de sorte que les anodes 12a, 12b, 12c ... soient alignées sur une même face de la membrane protonique 11 a et 11 b. L'ensemble des cathodes 13a, 13b et 13c sont alignées sur la face opposée de la membrane et sont exactement symétriques aux anodes par rapport au plan formé par la membrane 11 a.

Afin de mettre les éléments en série, il est nécessaire de relier électriquement une cathode avec l'anode adjacente située sur la face opposée de la membrane, par exemple 13a et 12b. Cet lien est réalisé en utilisant des pistes traversant le premier substrat.

Selon l'invention et comme représenté notamment en figure 3A, des pistes 14a, 14b, 14c, ..., traversent le premier substrat 11 entre lesdites cellules de conversion unitaires pour réaliser la connexion entre une cathode d'une cellule unitaire et une anode d'une cellule unitaire adjacente.

Une des caractéristiques avantageuses de l'invention est l'utilisation de moyens combinés de connexion entre des cellules unitaires et de diffusion gazeuse.

Pour ce faire, les pistes 14a, 14b, 14c, ... sont constituées de bandelettes formant couches de diffusion gazeuse et traversant le premier substrat par des zones de traversée (4a, 4b, ...), ces couches de diffusion gazeuse étant en particulier réalisées dans un second substrat de type tissu polymère poreux métallisé pour le rendre conducteur et réaliser ainsi les pistes de connexion entre les cellules unitaires.

Un tel substrat est préféré aux tissus de carbone, classiquement utilisés pour les couches de diffusion gazeuse, qui ne présentent pas une conductivité suffisante.

Pour réaliser une étanchéité entre la face recevant les anodes et la face recevant les cathodes, et entre les différents compartiments de la pile, un procédé de thermosoudage ou de collage des matériaux au niveau des traversées 4a, 4b, ... est prévu.

Les couches de diffusion gazeuse 14a, 14b, 14c ... réalisées dans un tissu polymère très poreux sont métallisées avec un alliage à base de nickel pour les rendre conductrices de sorte qu'elles constituent les pistes de connexion des cellules unitaires successives.

De préférence, les pistes ont une épaisseur variant de 100 µm à plusieurs dixièmes de millimètre, déterminée en fonction des caractéristiques électriques, mécaniques (flexibilité), et de transport de fluides recherchées.

Comme décrit précédemment, les pistes sont fixées à la membrane au niveau des traversées par apport d'un adhésif ou par thermosoudage de la matière composant la piste et la matière composant la membrane.

Ce même procédé est utilisé pour rendre imperméable aux gaz réactants cette zone de la membrane et ainsi les zones de traversée 4a, 4b, ... sont rendues étanches aux gaz.

La couche de diffusion gazeuse métallisée étant intrinsèquement conductrice, le courant électrique peut circuler entre les cellules adjacentes, mais les gaz ne peuvent pas traverser la membrane d'une face à l'autre au niveau des traversées rendues étanches.

Avantageusement les pistes peuvent selon l'invention n'être retenues à la membrane que par leur partie médiane et maintenues en contact avec les électrodes par la pression exercée par les différentes strates de la bande lorsque celle-ci est enroulée sur elle-même ce qui simplifie l'assemblage et limite le nombre de matériaux constituant la pile.

Si cela s'avère nécessaire pour les opérations d'assemblage, les pistes peuvent être maintenues en contact avec le premier substrat sur toute leur longueur en utilisant un produit adhésif.

Les matériaux utilisés pour fabriquer la pile à combustible présentée doivent résister à la corrosion en environnement acide, offrir une bonne conductivité électrique quand le matériau n'est pas spécifié comme isolant, permettre une perméation rapide de l'oxygène ou de l'air au niveau de la cathode et de l'hydrogène au niveau de l'anode.

Le matériau choisi pour la bande portant les anodes et les cathodes doit être assez poreux pour permettre aux ions H+ de traverser la bande entre les anodes et les cathodes des cellules unitaires.

Afin d'éviter la dispersion de l'hydrogène du côté anodique du premier substrat, les anodes doivent être encapsulées et isolées de l'environnement immédiat de la pile.

Pour ce faire et selon un mode de réalisation avantageux de l'invention particulièrement représenté en figure 2, la membrane est formée de deux parties, le premier substrat comportant une première bande latérale 11, comportant les dépôts, et une seconde bande latérale 15, libre de dépôts, se repliant selon un axe longitudinal (A) sur la première bande latérale 11 et scellée sur la première bande latérale en sorte d'enfermer les anodes 12a, 12b, 12c, ... dans un conduit tubulaire formant un premier moyen de canalisation 3 dans lequel circule de l'hydrogène.

La première bande 11 supporte les électrodes sur ces deux faces comme décrit précédemment, la seconde bande 15, de la même largeur que la partie 11, permet, comme visible en figure 3A, de recouvrir intégralement la partie supérieure de la bande 11 une fois l'ensemble plié en deux. L'épaisseur du premier substrat peut varier dans des épaisseurs de l'ordre de 25 à 100 µm en fonction des caractéristiques électrochimiques et de résistance mécanique désirées. Le matériau utilisé pour réaliser le premier substrat et pour qu'il ait sa fonction de membrane protonique est constitué d'un matériau thermoplastique comportant une structure moléculaire favorisant le transport des ions H+.

La face inférieure de la membrane comportant les cathodes peut rester ouverte à l'air libre car la pile utilise l'air ambiant pour fournir la réaction chimique en oxygène. L'encapsulation de la face comportant les anodes, réalisée en repliant la bande 15 de la membrane sur la face supérieure de la bande 11 réalise un conduit de circulation d'hydrogène. Les bords rapprochés de la bande 15 et de la bande 11 sont ensuite thermosoudés ou collés pour réaliser l'étanchéité du conduit.

Une fois les anodes encapsulées, l'hydrogène peut librement circuler sur toute la longueur de la bande.

La géométrie de la pile doit en outre permettre à l'air de traverser latéralement le bloc formé par la bande enroulée sur elle-même.

L'hydrogène traverse les couches de diffusion gazeuses au niveau des anodes et circule en empruntant les volumes libres aménagés le long des couches de diffusion gazeuses du côté des anodes et entre les anodes successives.

Selon l'invention, le premier substrat 11, 15 est constitué par un matériau souple enroulé sur lui même en spirale.

Le conduit ainsi créé peut se gonfler sous l'effet de la pression de l'hydrogène pendant sa circulation et la déformation de la membrane sous pression sera naturellement limitée par la compression exercée par les différentes couches réalisées par l'enroulement du premier substrat.

Les déformations locales peuvent être supprimées, si cela s'avère nécessaire, par un thermosoudage local des bandes 11 et 15 de la membrane protonique.

Selon un mode de réalisation avantageux de l'invention, l'air de la réaction cathodique traverse latéralement la spirale formée par la bande.

Pour ce faire, le convertisseur selon l'invention comporte des seconds moyens de canalisation 5 agencés pour canaliser un flux d'air sur la face comportant les cathodes dans une direction perpendiculaire à l'axe longitudinal (A) de la bande continue.

Selon la figure 4A, les seconds moyens de canalisation sont réalisés à l'aide d'un élément support longeant la face du premier substrat comportant les cathodes 13a, 13b, 13c, ... , cet élément support étant pourvu de cannelures 6 perpendiculaires à l'axe longitudinal dirigeant l'air perpendiculairement à l'axe longitudinal du premier substrat.

Afin de faciliter l'écoulement de l'air, la section de passage des cannelures peut être accrue. Le support 5 peut prendre différentes formes comme celle d'un film ondulé ou cannelé. Le support 5 sera toujours réalisée dans un matériau isolant électrique afin de ne pas connecter les cathodes entre elles. Sa hauteur sera définie en fonction de la section de passage de l'air désirée.

En variante représentée en figure 4B, l'élément support est solidaire de la face extérieure de la seconde bande 15 qui est dans ce cas une bande rapportée et la face interne de cette bande est elle même pourvue de cannelures longitudinales pour faciliter la circulation de l'hydrogène le long des anodes.

En variante, la bande 15 peut être solidaire de la bande 11 et emprisonnée entre deux couches de matériau isolant électrique et cannelé, la couche inférieure étant cannelée dans un sens longitudinal et la couche extérieur dans un sens transversal.

Un exemple de terminaison du convertisseur selon l'invention est représenté en figure 5. Le dispositif 20 est inséré aux deux extrémités de la bande afin d'injecter l'hydrogène dans le premier moyen de canalisation 3 étanche et afin de collecter le courant à la première anode (pôle négatif) et à la dernière cathode (pôle positif). Le dispositif 20 est muni d'un insert 21 a et d'une plaque de fermeture 21 b. L'insert 21 b est disposé à l'intérieur du conduit véhiculant l'hydrogène.

L'insert est suffisamment fin pour limiter au maximum la déformation de la membrane au niveau de sa terminaison.

L'insert comporte une canalisation 23 d'amenée d'hydrogène dont les dimensions sont définies en fonction de la consommation maximale de la pile.

L'insert comporte en outre un contact électrique 22 dimensionné en fonction des valeurs maximales du courant produit par la pile et relié à la première anode ou la dernière cathode.

Un conduit d'alimentation en hydrogène est disposé aux deux extrémités de la pile de façon à alimenter la pile en carburant par les deux extrémités si sa consommation est importante et/ou à permettre de purger la zone hydrogène de la pile lorsque celle-ci n'est pas en fonctionnement.

Les deux dispositifs sont munis des joints appropriés au niveau de la jonction entre l'insert et la plaque de fermeture 21 b entre lesquels est prise la bande 15 de la membrane afin de préserver l'étanchéité du système.

L'ensemble représenté en figure 1 et formé par l'ensemble membrane-électrodes, les couches de diffusion gazeuse et les inserts d'injection/collecte 20 est souple et peut être enroulé sur lui-même sans créer de connections parasites ou non désirées entre les différentes anodes et cathodes. La bande sera préférentiellement enroulée autour d'une matrice de forme ovale ou cylindrique dans laquelle sera aménagé un espace pour recevoir le dispositif intérieur 20. De même, un cerclage peut entourer la bande afin d'isoler les anodes disposées sur la face extérieure de la spirale de l'environnement de la pile. Le cerclage fournit également la résistance mécanique et la force de compression nécessaire à la tenue de l'intégrité de la spirale et au maintien du contact électrique entre les couches de diffusion et les électrodes. Le cerclage dispose d'un aménagement pour recevoir le dispositif extérieur 20. La matrice et le cerclage sont réalisés dans un matériau léger, mécaniquement résistant et isolant électrique.

L'enroulement en spirale de la bande regroupant une pluralité de cellules unitaires reliées en série selon l'invention apporte plusieurs avantages qui sont principalement une plus grande compacité de l'ensemble, une meilleure diffusion thermique dans le corps de la pile, et donc une meilleure homogénéité thermique, une grande surface de membrane, en contact à la fois avec l'air cathodique et avec l'hydrogène anodique, qui permet d'accroître le transport d'eau à travers la membrane et le transport de l'air humide vers l'hydrogène sec, ce qui favorise la stabilité de l'humidification de la membrane. De plus, le nombre de cellules peut être modifié en allongeant ou raccourcissant la bande sans changer la conception générale de la pile pour autant que le cerclage extérieur soit prévu de dimensions réglables.

La membrane protonique du convertisseur selon l'invention peut en particulier être une membrane à base de chaînes carbonées et de téflon sur lesquels sont greffés des terminaisons HSO₃ pour le transport des ions H⁺, les cathodes et les anodes pouvant être à base de poudre de graphite et de platine déposés sur la membrane.

Les cellules unitaires obtenues fournissent une différence de potentiel de l'ordre de 0,7V et une intensité de l'ordre de 300 mA/cm².

La disposition de la pile présentée permet de réduire le coût de la pile, réduire son poids, réduire son volume, réduire le nombre d'opérations d'assemblage et propose une surface accrue d'échange d'eau entre les réactants favorisant ainsi l'hydratation de la membrane.

Selon la figure 4B la bande 15 est un élément rapporté comportant les cannelures décrites précédemment.

L'invention n'est pas limitée aux exemples de réalisation décrits et notamment la bande 15 peut être réalisée dans un matériau souple et extensible tel qu'un élastomère moulé.

## Revendications

1. Convertisseur électrochimique (1) à membrane protonique comportant une pluralité de cellules de conversion électrochimique unitaires (2a, 2b, 2c) reliées en série, comportant un premier substrat (11, 15) constituant la membrane protonique, comportant une première face (11a), sur laquelle est réalisée une succession de premiers dépôts formant une série d'anodes espacées (12a, 12b, 12c), et une seconde face, sur laquelle est réalisée une succession de seconds dépôts formant une série de cathodes espacées (13a, 13b, 13c), disposées en regard desdites anodes, lesdites anodes et cathodes formant la pluralité de cellules de conversion unitaires (2a, 2b, 2c), comportant en outre des pistes (14a, 14b, 14c), de connexion entre une cathode d'une cellule unitaire et une anode d'une cellule unitaire adjacente, traversant le premier substrat (11, 15) entre lesdites cellules de conversion unitaires **caractérisé en ce que** le premier substrat (11) est constitué par un matériau souple et **en ce que** les pistes (14a, 14b, 14c) sont constituées de bandelettes formant couches de diffusion gazeuses, constituées d'un second substrat polymère poreux métallisé pour le rendre conducteur, traversant le premier substrat par des zones de traversée (4a, 4b) et maintenues en contact avec les électrodes constituées par les anodes et les cathodes sur le premier substrat, lesdites bandelettes formant des moyens combinés de connexion entre les cellules unitaires et de diffusion gazeuse étant maintenues en contact avec les électrodes par pression.

2. Convertisseur électrochimique selon la revendication 1, **caractérisé en ce que** le premier substrat comporte une première bande latérale (11), comportant les dépôts, et une seconde bande latérale (15), libre de dépôts, se repliant selon un axe longitudinal (A) sur la première bande latérale (11) et scellée sur la première bande latérale en sorte d'enfermer les anodes (12a, 12b, 12c) dans un conduit tubulaire formant premier moyen de canalisation (3) dans lequel circule de l'hydrogène.

3. Convertisseur électrochimique selon la revendication 1 ou 2 **caractérisé en ce que** le premier substrat (11) est enroulé sur lui même en spirale.

4. Convertisseur électrochimique selon l'une des revendications précédentes, **caractérisé en ce que** les zones de traversée (4a, 4b) sont rendues étanches aux gaz.

5. Convertisseur électrochimique selon l'une des revendications précédentes, **caractérisé en ce que** le premier substrat est constituée d'un matériau thermoplastique comportant une structure moléculaire favorisant le transport des ions H+.

6. Convertisseur électrochimique selon l'une des revendications précédentes, **caractérisé en ce qu'**il comporte des seconds moyens de canalisation (5) agencés pour canaliser un flux d'air sur la face comportant les cathodes dans une direction perpendiculaire à l'axe longitudinal (A) de la bande continue.

7. Convertisseur électrochimique selon la revendication 6 **caractérisé en ce que** les seconds moyens de canalisation (5) comportent un élément support pourvu de cannelures (6) perpendiculaires à l'axe longitudinal.

8. Convertisseur électrochimique selon les revendications 2 et 7 **caractérisé en ce que** l'élément support est une face extérieure de la seconde bande (15).

9. Convertisseur électrochimique selon la revendication 3 **caractérisé en ce que** les bandelettes sont maintenues en contact avec les électrodes par la pression exercée par les différentes strates de la bande lorsque celle-ci est enroulée sur elle-même.

## Claims

1. An electrochemical converter (1) with proton membrane, comprising a plurality of unitary electrochemical conversion cells (2a, 2b, 2c,-) connected in series, comprising a first substrate (11, 15) forming the proton membrane, comprising a first face (11a), on which a succession of first deposits is produced forming a series of spaced-apart anodes (12a, 12b, 12c,-), and a second face on which a succession of second deposits is produced forming a series of spaced-apart cathodes (13a, 13b, 13c,-) disposed facing said anodes, said anodes and cathodes forming the plurality of unitary conversion cells (2a, 2b, 2c,-), also comprising tracks (14a, 14b, 14c,-), for connection between a cathode of one unitary cell and an anode of an adjacent unitary cell, passing through the first substrate (11, 15) between the said unitary conversion cells, **characterised in that** the first substrate (11) is formed by a flexible material and **in that** the tracks (14a, 14b, 14c) are formed of strips forming gaseous diffusion layers, formed of a second porous polymer substrate metallised in order to make it conductive, traversing the first substrate through traverse zones (4a, 4b,-) and maintained in contact with the electrodes formed by the anodes and cathodes on the first substrate, said strips forming combined means for connection between the unitary and gaseous diffusion cells being maintained in contact with the electrodes by pressure.

2. An electrochemical convertor according to claim 1, **characterised in that** the first substrate comprises a first lateral band (11), comprising the deposits, and a second lateral band (15), free from deposits, folded along a longitudinal axis (A) on the first lateral band (11) and scaled on the first lateral band so as to enclose the anodes (12a, 12b, 12c,-) in a tubular conduit forming a first channelling means (3) in which hydrogen flows.

3. An electrochemical convertor according to claim 1 or 2, **characterised in that** the first substrate (11) is wound on itself in a spiral.

4. An electrochemical convertor according to one of the preceding claims, **characterised in that** the traverse zones (4a, 4b,-) are made gastight.

5. An electrochemical convertor according to one of the preceding claims, **characterised in that** the first substrate is formed from a thermoplastic material comprising a molecular structure promoting the transportation of the H+ ions.

6. An electrochemical convertor according to one of the preceding claims, **characterised in that** it comprises second channelling means (5) arranged to channel an air flow on the face comprising the cathodes in a direction perpendicular to the longitudinal axis (A) of the continuous band.

7. An electrochemical convertor according to claim 6, **characterised in that** the second channelling means (5) comprise a support element provided with flutes (6) perpendicular to the longitudinal axis.

8. An electrochemical convertor according to claims 2 and 7, **characterised in that** the support element is an external face of the second band (1b).

9. An electrochemical convertor according to claim 3, **characterised in that** the strips are held in contact with the electrodes by the pressure exerted by the various strata of the band when the latter is wound on itself.

## Patentansprüche

1. Elektrochemischer Wandler (1) mit Protonenmembran, der mehrere einzelne elektrochemische Wandlerzellen (2a, 2b, 2c, ...) enthält, die in Reihe verbunden sind, und ein erstes Substrat (11, 15) umfasst, das die Protonenmembran bildet und eine erste Fläche (11a), auf der eine Folge erster Ablagerungen verwirklicht ist, die eine Reihe beabstandeter Anoden (12a, 12b, 12c, ...) bilden, sowie eine zweite Fläche, auf der eine Folge zweiter Ablagerungen verwirklich ist, die eine Reihe beabstandeter Katoden (13a, 13b, 13c, ...) bilden, die gegenüber den Anoden angeordnet sind, aufweist, wobei die Anoden und Katoden die mehreren einzelnen Wandlerzellen (2a, 2b, 2c, ...) bilden, und außerdem Verbindungsbahnen (14a, 14b, 14c, ...) zwischen einer Katode einer einzelnen Zelle und einer Anode einer benachbarten einzelnen Zelle umfasst, die zwischen den einzelnen Wandlerzellen durch das erste Substrat (11, 15) verlaufen, **dadurch gekennzeichnet, dass** das erste Substrat (11) aus einem nachgiebigen Material gebildet ist und dass die Bahnen (14a, 14b, 14c, ...) aus Streifen gebildet sind, die gasförmige Diffusionsschichten bilden, die aus einem zweiten porösen Polymersubstrat gebildet sind, das metallisiert ist, um es leitend zu machen, die in Durchgangszonen (4a, 4b, ...) durch das erste Substrat verlaufen und mit den Elektroden, die durch die Anoden und die Katoden auf dem ersten Substrat gebildet sind, in Kontakt gehalten werden, wobei die Streifen kombinierte Mittel für die Verbindung zwischen den einzelnen Zellen und für die gasförmige Diffusion bilden, die mit den Elektroden durch Druck in Kontakt gehalten werden.

2. Elektrochemischer Wandler nach Anspruch 1, **dadurch gekennzeichnet, dass** das erste Substrat ein erstes seitliches Band (11), das die Ablagerungen aufweist, und ein zweites seitliches Band (15), das frei von Ablagerungen ist und in Richtung einer Längsachse (A) auf das erste seitliche Band (11) gefaltet ist und auf das erste seitliche Band geschmolzen ist, umfasst, derart, dass die Anoden (12a, 12b, 12c, ...) in einer rohrförmigen Leitung eingeschlossen sind, die erste Kanalmittel (3) bildet, in der Wasserstoff zirkuliert.

3. Elektrochemischer Wandler nach Anspruch 1 oder 2, **dadurch gekennzeichnet, dass** das erste Substrat (11) spiralförmig auf sich selbst gewickelt ist.

4. Elektrochemischer Wandler nach einem der vorhergehenden Ansprüche, **dadurch gekennzeichnet, dass** die durchlaufenen Zonen (4a, 4b, ...) gasdicht gemacht sind.

5. Elektrochemischer Wandler nach einem der vorhergehenden Ansprüche, **dadurch gekennzeichnet, dass** das erste Substrat aus einem thermoplastischen Material gebildet ist, das eine Molekularstruktur aufweist, die den Transport von H⁺-Ionen begünstigt.

6. Elektrochemischer Wandler nach einem der vorhergehenden Ansprüche, **dadurch gekennzeichnet, dass** er zweite Kanalbildungsmittel (5) enthält, die dazu ausgelegt sind, einen Luftstrom auf die die Katoden aufweisende Fläche in einer Richtung senkrecht zu der Längsachse (A) des ununterbrochenen Bandes zu leiten.

7. Elektrochemischer Wandler nach Anspruch 6, **dadurch gekennzeichnet, dass** die zweiten Kanalbildungsmittel (5) ein Unterstützungselement aufweisen, das mit Rillen (6) senkrecht zu der Längsachse versehen ist.

8. Elektrochemischer Wandler nach den Ansprüchen 2 und 7, **dadurch gekennzeichnet, dass** das Unterstützungselement eine Außenfläche des zweiten Bandes (15) ist.

9. Elektrochemischer Wandler nach Anspruch 3, **dadurch gekennzeichnet, dass** die Streifen mit den Elektroden durch Druck, der von den verschiedenen Schichten des Bandes ausgeübt wird, wenn es auf sich selbst gewickelt ist, in Kontakt gehalten werden.
